# EUROPÄISCHE PATENTSCHRIFT

(11) **EP 1 411 232 B1**
(45) Veröffentlichungstag und Bekanntmachung des Hinweises auf die Patenterteilung: **13.06.2012**
(21) Anmeldenummer: 03090210.0
(22) Anmeldetag: 10.07.2003
(51) Int. Cl.: F02D 41/16, F02D 37/02, F02P 5/15, F02D 31/00, F02D 41/14

(54) **Verfahren und Vorrichtung zur Leerlaufregelung bei Verbrennungsmotoren**
Method and device for controlling the idling of internal combustion engines
Méthode et dispositif de régulation du ralenti de moteurs à combustion interne

(30) Priorität: 16.10.2002 DE 10248780
(43) Veröffentlichungstag der Anmeldung: 21.04.2004
(73) Patentinhaber: Volkswagen AG, 38436 Wolfsburg (DE)
(72) Erfinder: Pelz, Norbert, 38489 Tappenbeck (DE); Schultalbers, Matthias, 38536 Meinersen, Ahnsen (DE); Dünow, Peter Dr., 18196 Kavelstorf (DE)
(74) Vertreter: Patentanwälte Bressel und Partner

(56) Entgegenhaltungen:
- WO-A-01/61171
- US-A- 4 582 032
- US-A- 5 253 623

## Beschreibung

Die Erfindung bezieht sich auf eine Vorrichtung und ein Verfahren zur Leerlaufregelung bei Verbrennungsmotoren. US 5233623 offenbart ein Stromsystem mit einer Drehmomentreserve, wobei der Zündzeitpunkt variiert wird , um das Drehmoment zu ändern.

Ein Zuschalten weiterer Verbraucher, schwankende Motortemperaturen, Reibungsunterschiede und nicht einheitlichen Kraftstoffqualitäten führen zu Störungen der Leerlaufdrehzahl. Dabei ist es bekannt, bei einem Einbruch der Leerlaufdrehzahl durch einen Drosselklappensteller das Luftverhältnis zu variieren. Aufgrund von Verzögerungen beim Füllungsaufbau im Verbrennungsmotor ist die Geschwindigkeit für einen derartigen Eingriff jedoch begrenzt.

Der Erfindung liegt daher das technische Problem zugrunde, ein Verfahren und eine Vorrichtung zur schnellen Ausregelung von Drehzahlschwankungen im Leerlauf zu schaffen.

Die Lösung des Problems ergibt sich durch die Gegenstände mit den Merkmalen der Ansprüche 1 und 5. Weitere vorteilhafte Ausgestaltungen der Erfindung ergeben sich aus den Unteransprüchen.

Bei einem gegebenen Luftverhältnis wird der Zündzeitpunkt variiert, wobei ein positiver Stellbereich für eine Variation ein Reservemoment beschreibt und das Reservemoment mindestens in Abhängigkeit einer auftretenden Drehzahlschwankung eingestellt wird. Die Leistung eines Verbrennungsmotors ist bei einer gegebenen Drosselklappenstellung in Abhängigkeit des Zündzeitpunkts veränderbar. Das bei einer gegebenen Drosselklappenstellung durch eine Frühverstellung des Zündzeitpunkts maximal erzielbare Moment wird als Basismoment bezeichnet. Der Zündzeitpunkt eines mittleren Fahrerwunschmoments wird davon abweichend gewählt. Die Differenz zwischen Basismoment und mittlerem Fahrerwunschmoment wird als Reservemoment bezeichnet. Die Differenz zwischen den zugehörigen Zündzeitpunkten ist der positive Stellbereich für eine Variation. Eine Veränderung des Zündzeitpunkts ist mit einer hohen Geschwindigkeit realisierbar, so daß dadurch sehr schnell auf Drehzahleinbrüche reagiert werden kann. Für eine Verbrauchsoptimierung und für eine Maximierung der Laufruhe ist als Zündzeitpunkt nach Möglichkeit der Zündzeitpunkt zur Erzielung des Basismoments zu wählen, d.h. das Reservemoment ist sehr gering. Bei einem geringen Reservemoment ist jedoch auch eine Eingriffsmöglichkeit durch eine Zündzeitpunktverstellung gering. Das Reservemoment wird daher in Abhängigkeit auftretender Drehzahlschwankungen dynamisch gesteuert. Treten relevante Drehzahlschwankungen auf, so wird das Reservemoment erhöht, bei Beruhigung des Drehzahlverlaufs wird das Reservemoment wieder abgebaut. Dadurch können die sich entgegenstehenden Forderungen nach Verbrauchsoptimierung und/oder maximaler Laufruhe und schnellem Ausgleich von Drehzahleinbrüchen berücksichtigt werden.

In einer weiteren Ausführungsform werden Drehzahlschwankungen in einem begrenzten Frequenzbereich durch eine Filterkette erkannt. Durch die Filterkette wird verhindert, daß die dynamische Steuerung des Reservemoments auf Meßstörungen anspricht. Eine Veränderung des Zündzeitpunktes wird nur bei Drehzahlschwankungen, welche innerhalb eines bestimmten Bereichs liegen, durchgeführt. Langsamen Änderungen wird hingegen durch eine Verstellung des Luftverhältnis begegnet.

In einer bevorzugten Ausführungsform umfaßt die Filterkette eine erste Tiefpaßfilterung, eine Wichtung, eine Gleichrichtung und eine zweite Tiefpaßfilterung eines Signals der Drehzahlschwankung. Durch die erste Tiefpaßfilterung werden hochfrequente Anteile des Signals unterdrückt. Anschließend erfolgt eine Wichtung und Gleichrichtung des Signals, beispielsweise unter Verwendung einer Kennlinie. Zur Bestimmung eines Schätzwertes für eine Varianz in der gewichteten Drehzahlabweichung wird eine zweite Tiefpaßfilterung durchgeführt. Überschreitet ein derart bestimmter Schätzwert einen vorab bestimmten Schwellwert, so erfolgt ein Eingriff für eine Erhöhung des Reservemomentes. Unterschreitet der Schätzwert eine bestimmte Untergrenze, so wird das Reservemoment wieder abgebaut.

In einer weiteren Ausführungsform wird das Reservemoment außerdem in Abhängigkeit einer Auslastung eines Generators variiert. Aufgrund der geringen Drehzahl im Leerlaufbereich ist der Generator häufig an seiner Leistungsgrenze. In diesem Fall führt ein Zuschalten weiterer elektrischer Verbraucher nur zu einer verschwindenden Erhöhung des durch den Generator auf den Motor aufgebrachten Lastmoments. Liegt eine hohe Generatorauslastung vor, so ist auch bei einem Zuschalten weiterer Verbraucher kaum mit einer Erhöhung des auf den Motor aufgebrachten Lastmoments und einem damit verbundenen Drehzahleinbruch zu rechnen. Daher ist auch nur ein geringes Reservemoment für eine Störunterdrückung notwendig.

Die Erfindung wird nachfolgend anhand eines bevorzugten Ausführungsbeispiels näher erläutert. Die Figuren zeigen:
- Fig. 1: eine schematische Darstellung eines Reservemoments,
- Fig. 2: eine schematische Darstellung eines Leerlaufreglers und
- Fig. 3: eine Prinzipdarstellung einer dynamischen Reservemomentsteuerung.

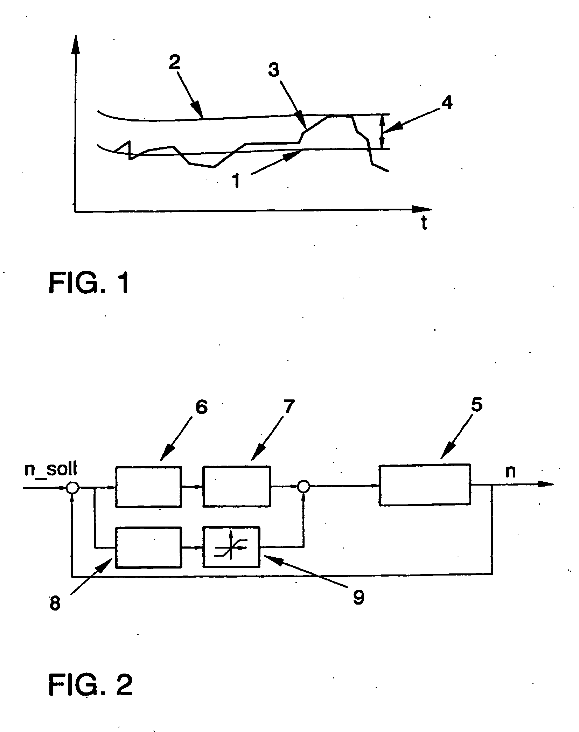

Fig. 1 zeigt schematisch den Zeitverlauf eines mittleren Fahrerwunschmoments 1, eines Basismoments 2 und eines Gesamtsollmoments 3 in Abhängigkeit der Zeit t. Das Gesamtsollmoment 3 ist das aktuell geforderte Fahrerwunschmoment, dessen gemittelter Wert durch das mittlere Fahrerwunschmoment 1 wiedergegeben wird. Das Basismoment 2 ist das bei einem gegebenen Luftverhältnis durch Verstellung des Zündzeitpunkts maximal erzielbare Moment. Die Differenz zwischen Basismoment 2 und mittlerem Fahrerwunschmoment 1 ist ein Reservemoment 4. Das Reservemoment 4 ist der Wert für eine maximale Erhöhung des mittleren Fahrerwunschmoments 1 bei einem gegebenen Luftverhältnis. Reicht das Reservemoment 4 nicht aus, um eine Störung zu kompensieren, so muß das Luftverhältnis und damit das zugehörige Basismoment 2 verändert werden.

Bei einem kleinen Reservemoment 4 sind Drehzahleinbrüche bei gleicher Störung größer als bei größerer Reserve. Im Interesse einer verbesserten Laufruhe und einer Verbrauchseinsparung ist jedoch in einigen Anwendungsfällen ein kleines Reservemoment 4 zu wählen, d.h. eine größere Regelabweichung muß in Kauf genommen werden.

Fig. 2 zeigt schematisch einen Leerlaufregler mit Zündzeitpunktverstellung für einen Verbrennungsmotor 5, umfassend einen Luftpfadregler 6 für eine Veränderung des Luftverhältnisses in einem Füllungspfad 7 und einen Zündpfadregler 8 für eine Veränderung des Zündzeitpunkts. Die Veränderung des Zündzeitpunkts ist durch eine Begrenzungsfunktion 9 beschränkt. Regelgröße des dargestellten Leerlaufreglers ist die Drehzahl n des Motors.

Neben der verbesserten Störunterdrückung durch Einführung des Zündpfadreglers 8 hat dieser auch Einfluß auf die Stabilität des Gesamt-Drehzahlregelkreises. Im Normalfall ist in bei einem Leerlaufbetrieb ein Sollsignal n_soll für die Drehzahl n konstant. Durch die Gegenkopplung wirkt daher bei richtiger Einstellung der Zündpfadregler 8 dämpfend auf das System. Das System bestehend aus Verbrennungsmotor 5 und Zündpfadregler 8 verhält sich somit stabiler als ein System bestehend ausschließlich aus dem Verbrennungsmotor 5.

Übersteigt der Stellgrößenbeitrag des Zündpfadreglers 8 den Betrag des Reservemoments, so verschlechtert sich der Grad der Gegenkopplung in dem für die Regelung relevanten Frequenzbereich. Eine kleine Veränderung des Motorverhaltens kann dann die Regelgüte verschlechtern. Wird der Betrag des Reservemoments erhöht, so kann die Wirkung des Zündpfadreglers 8 wieder verbessert werden. Ist die Reserve jedoch bereits ausreichend groß gewählt, so kann das Regelverhalten durch die Reserveerhöhung nicht verbessert werden. Ein hoher Betrag des Reservemoments hat eine ungleichmäßigere Verbrennung als Folge, so daß durch eine übermäßige Erhöhung des Reservemoments das Regelverhalten verschlechtert wird. Bevorzugt wird daher eine Reservemomentanpassung nur bei sehr kleinen Reservewerten eingesetzt.

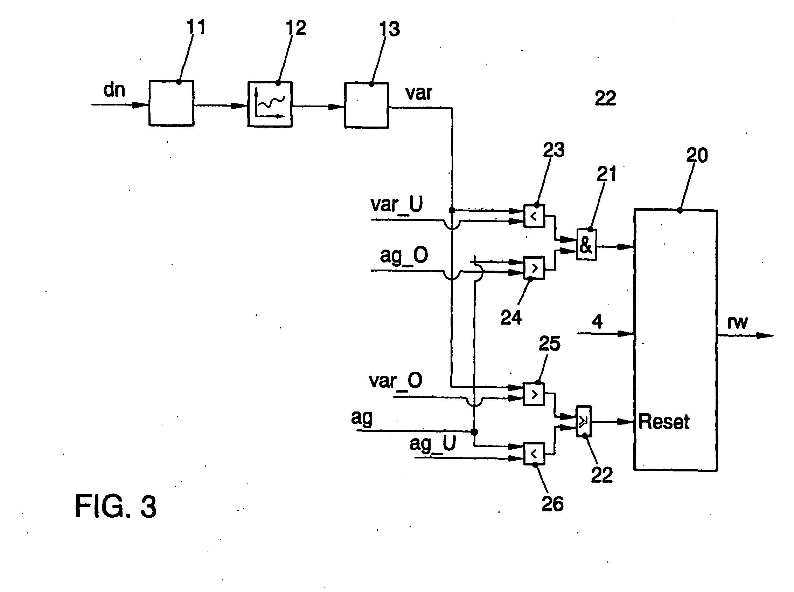

Fig. 3 zeigt eine Prinzipdarstellung einer dynamischen Reservemomentsteuerung, wobei der Betrag eines Reservewertes rw in Abhängigkeit von Drehzahlschwankungen dn und einem Auslastungsgrad ag eines Generators gesteuert wird. Der Reservewerte rw wird zu einem Gesamtbetrag des beispielsweise aufgrund anderer Motorsteuerungsfunktionen geforderten Reservemoments addiert. Die Erhöhung des Reservewertes rw wird in einem Rechenmittel 20 ermittelt. Es sind auch Anwendungsfälle denkbar, wo auf nur einen Tiefpaßfilter 11 zurückgegriffen wird bzw. einzelne Elemente weggelassen werden.

Eine Erkennung und Einordnung auftretender Drehzahlschwankungen dn erfolgt über eine Filterkette, umfassend ein erstes Tiefpaßfilter 11, ein Rechenmittel 12 für eine Wichtung und eine Gleichrichtung des Signals, und ein zweites Tiefpaßfilter 13. Durch das erste Tiefpaßfilter 11 werden hochfrequente Anteile des Signals der Drehzahlschwankung dn unterdrückt. Die Wichtung und Gleichrichtung des Signals erfolgt unter Verwendung einer Kennlinie. Ausgangssignal des zweiten Tiefpaßfilters 13 ist ein Schätzwert var für eine Varianz in der gewichteten Drehzahlabweichung. Die Tiefpaßfilter 11, 13 können entweder softwaretechnisch oder hardwaretechnisch realisiert sein. Bei einer softwaretechnischen Ausbildung ist eine gemeinsame Ausbildung mit dem Rechenmittel 12 denkbar.

Der Schätzwert var wird in einem Schwellwert-Schalter 23 mit einer Schwelle var_U verglichen. Überschreitet der Schätzwert var die Schwelle var_U, so wird ein dynamischer Reservewert rw erhöht. Bei Beruhigung einer Drehzahlschwankung wird die Reserveerhöhung langsam wieder zu Null. Dies ist beispielsweise durch einen Integratoranteil in der Regelung realisierbar. Der Schätzwert var wird in einem zweiten Schwellwert-Schalter 25 mit einer Schwelle var_O verglichen. Überschreitet der Schätzwert var die Schwelle var_O, so wird das Reservemoment durch eine RESET -funktion auf einen Ausgangswert zurückgesetzt. Daneben kann sich bei var_U < var < var_O der Betrag des Reservewerts rw auch auf einen Wert zwischen Null und dem Resetwert einstellen.

Bei einer geringen Generatorauslastung ag wird der Reservewert rw aufgrund eines Mitkopplungsverhaltens des Generators ebenfalls erhöht. Die Generatorauslastung wird daher mittels zweier Schwellwertschalter 24, 26 mit Schwellwerten ag_O, ag_U verglichen. Liegt die Generatorauslastung unterhalb der Schwelle ag_U, so wird der dynamische Reservewert rw unabhängig von den Drehzahlschwankungen dn auf den RESET-Wert erhöht. Wird dagegen ein Schwellwert ag_O überschritten, so erfolgt ebenfalls unabhängig von den anliegenden Drehzahlschwankungen keine Erhöhung des Reservewerts rw.

Mittels Logikelementen 21, 22 werden die Vorgaben für ein Verstellen des Reservewerte rw aufgrund der Drehzahlschwankung dn und aufgrund der Generatorauslastung ag verknüpft. Eine Erhöhung des Reservewertes rw erfolgt nur, wenn sowohl eine geringe Generatorauslastung ag < ag_O vorliegt als auch eine starke Drehzahlschwankung dn mit var > var_U. Das Logikelement 21 ist daher als UND-Element ausgebildet. Ein Setzen des Reservewertes rw auf den RESET-Wert erfolgt hingegen, wenn entweder eine Maximalschwankung der Drehzahl dn überschritten wird, var > var_O, oder die Generatorauslastung ag sehr gering ist, ag < ag_U. Das zugehörige Logikelement 22 ist daher als ODER-Element ausgebildet. Durch Nullsetzen der Schwellwerte ag_O, ag_U ist eine Berücksichtigung der Generatorauslastung deaktiviert.

Die Schwellwert-Schalter 23, 24, 25, 26 und die Logikelemente 21, 22 sind ebenfalls entweder hardwaremäßig oder softwaretechnisch realisierbar, wobei bei einer softwaretechnischen Ausführung eine gemeinsame Ausführung mit dem Rechenmittel 20 denkbar ist.

Ist bereits ein hohes Reservemoment 4 eingestellt, so ist eine weitere Erhöhung um den Reservewert rw nicht sinnvoll. Das aktuelle eingestellte Reservemoment 4 wird daher in der Variation des Reservewerts rw berücksichtigt. Daneben sind beispielsweise auch Maximalwerte für Reserveveränderungen und andere Einflüsse berücksichtigbar.

## Patentansprüche

1. Verfahren zur Leerlaufregelung bei Verbrennungsmotoren, umfassend einen Luftpfadregler (6) für eine Veränderung des Luftverhältnisses in einem Füllungspfad (7), wobei bei einem gegebenen Luftverhältnis der Zündzeitpunkt variiert, wobei ein positiver Stellbereich für eine Variation ein Reservemoment (4) beschreibt, **dadurch gekennzeichnet, daß**
das Reservemoment (4) mindestens in Abhängigkeit einer auftretenden Drehzahlschwankung (dn) eingestellt wird, wobei Drehzahlschwankungen (dn) in einem begrenzten Frequenzbereich durch eine Filterkette erkannt werden.

2. Verfahren nach Anspruch 1, **dadurch gekennzeichnet, daß** die Filterkette eine erste Tiefpaßfilterung und/oder eine Wichtung und/oder eine Gleichrichtung und/oder eine zweite Tiefpaßfilterung eines Signals der Drehzahlschwankung umfaßt.

3. Verfahren nach einem der genannten Ansprüche, **dadurch gekennzeichnet, daß** das Reservemoment (4) außerdem in Abhängigkeit einer Auslastung eines Generators variiert wird.

4. Vorrichtung zur Leerlaufregelung bei Verbrennungsmotoren, umfassend einen Luftpfadregler (6) für eine Veränderung des Luftverhältnisses in einem Füllungspfad (7), durch einen Zündpfadregler (8) bei einem gegebenen Luftverhältnis der Zündzeitpunkt variierbar ist, wobei ein positiver Stellbereich für eine Variation ein Reservemoment (4) beschreibt,
**dadurch gekennzeichnet, daß**
das Reservemoment (4) mindestens in Abhängigkeit einer auftretenden Drehzahlschwankung (dn) eingestellt wird, wobei Drehzahlschwankungen (dn) in einem begrenzten Frequenzbereich durch eine Filterkette erkennbar sind.

5. Vorrichtung nach Anspruch 4, **dadurch gekennzeichnet, daß** die Filterkette ein erstes Tiefpaßfilter (11) und/oder ein Rechenmittel (12) für eine Wichtung und/oder eine Gleichrichtung und/oder ein zweites Tiefpaßfilter (13) umfaßt.

6. Vorrichtung nach einem der Ansprüche 4 bis 5, **dadurch gekennzeichnet, daß** das Reservemoment (4) außerdem in Abhängigkeit einer Auslastung eines Generators variierbar ist.

## Claims

1. Method for controlling the idling of internal combustion engines, comprising an air path controller (6) for changing the air ratio in a filling path (7), wherein the ignition time varies given a particular air ratio, wherein a positive actuation range for variation describes a reserve torque (4),
**characterized in that**
the reserve torque (4) is set at least as a function of a fluctuation (dn) in rotational speed which occurs, wherein fluctuations (dn) in rotational speed are detected in a known frequency range by means of a filter chain.

2. Method according to Claim 1, **characterized in that** the filter chain comprises a first low-pass filtering and/or weighting and/or rectification and/or second low-pass filtering of a signal of the fluctuation in the rotational speed.

3. Method according to one of the abovementioned claims, **characterized in that** the reserve torque (4) is also varied as a function of a utilization factor of a generator.

4. Device for controlling the idling of internal combustion engines, comprising an air path controller (6) for changing the air ratio in a filling path (7), wherein the ignition time can be varied given a particular air ratio, wherein a positive actuation range for variation describes a reserve torque (4),
**characterized in that**
the reserve torque (4) is set at least as a function of a fluctuation (dn) in rotational speed which occurs, wherein fluctuations (dn) in rotational speed are detected in a known frequency range by means of a filter chain.

5. Device according to Claim 4, **characterized in that** the filter chain comprises a first low-pass filter (11) and/or computing means (12) for weighting and/or rectifying and/or a second low-pass filter (13).

6. Device according to one of Claims 4 to 5, **characterized in that** the reserve torque (4) can also be varied as a function of a utilization factor of a generator.

## Revendications

1. Procédé de régulation du ralenti sur des moteurs à combustion interne, comprenant un régulateur de trajet d'air (6) pour modifier la proportion d'air dans un trajet de remplissage (7), le moment d'allumage variant avec une proportion d'air donnée, une plage de réglage positive décrivant, pour une variation, un couple de réserve (4), **caractérisé en ce que** le couple de réserve (4) est réglé au moins en fonction d'une fluctuation de la vitesse de rotation (dn) qui se produit, les fluctuations de la vitesse de rotation (dn) étant détectées dans une plage de fréquences limitée par une chaîne de filtrage.

2. Procédé selon la revendication 1, **caractérisé en ce que** la chaîne de filtrage comprend un premier filtrage passe-bas et/ou une pondération et/ou un redressement et/ou un deuxième filtrage passe-bas d'un signal de la fluctuation de la vitesse de rotation.

3. Procédé selon l'une des revendications précédentes, **caractérisé en ce que** le couple de réserve (4) est en outre varié en fonction d'une charge d'un générateur.

4. Dispositif de régulation du ralenti sur des moteurs à combustion interne, comprenant un régulateur de trajet d'air (6) pour modifier la proportion d'air dans un trajet de remplissage (7), par un régulateur de trajet d'allumage (8) qui permet de faire varier le moment d'allumage en présence d'une proportion d'air donnée, une plage de réglage positive décrivant, pour une variation, un couple de réserve (4), **caractérisé en ce que** le couple de réserve (4) est réglé au moins en fonction d'une fluctuation de la vitesse de rotation (dn) qui se produit, les fluctuations de la vitesse de rotation (dn) pouvant être détectées dans une plage de fréquences limitée par une chaîne de filtrage.

5. Dispositif selon la revendication 4, **caractérisé en ce que** la chaîne de filtrage comprend un premier filtre passe-bas (11) et/ou un moyen de calcul (12) pour une pondération et/ou un redressement et/ou un deuxième filtre passe-bas (13).

6. Dispositif selon l'une des revendications 4 et 5, **caractérisé en ce que** le couple de réserve (4) peut en outre être varié en fonction d'une charge d'un générateur.
